# EUROPÄISCHE PATENTSCHRIFT

(11) **EP 0 665 566 B1**
(45) Veröffentlichungstag und Bekanntmachung des Hinweises auf die Patenterteilung: **11.08.1999**
(21) Anmeldenummer: 95100790.5
(22) Anmeldetag: 20.01.1995
(51) Int. Cl.: H01H 39/00, B60K 28/14

(54) **Elektrischer Sicherheitsschalter für Kraftfahrzeuge**
Electric safety switch for motor vehicles
Interrupteur de sécurité électrique pour véhicules automobiles

(30) Priorität: 01.02.1994 DE 4402994; 18.07.1994 DE 4425307
(43) Veröffentlichungstag der Anmeldung: 02.08.1995
(73) Patentinhaber: Bayerische Motoren Werke Aktiengesellschaft, 80788 München (DE); Bender, Richard, Dr., 91207 Lauf (DE)
(72) Erfinder: Albiez, Robert, D-85084 Reichertshofen (DE); Krappel, Alfred, D-85737 Ismaning (DE); Groebmair, Max, D-83623 Dietramszell (DE); Hallweger, Bernd, D-85778 Haimhausen (DE)

(56) Entgegenhaltungen:
- EP-A- 0 398 307
- EP-A- 0 563 947
- DE-A- 4 208 011
- DE-A- 4 305 819
- DE-U- 8 433 042
- DE-U- 9 401 486
- FR-A- 2 616 958
- GB-A- 559 923

## Beschreibung

Die Erfindung bezieht sich auf einen elektrischen Sicherheitsschalter mit den Merkmalen des Oberbegriffs von Patentanspruch 1.

Ein derartiger Schalter ist aus der DE 84 33 042 U bekannt. Der Schalter ist unabhängig von der Batterie im Verlauf des Batteriekabels angeordnet. Dadurch ergeben sich einerseits Befestigungsprobleme und andererseits Probleme dann, wenn der Schalter ausgelöst worden ist. Der Teil der Batterieleitung bis hin zum Sicherheitsschalter ist weiterhin ungesichert und kann damit einen Kurzschluß verursachen. Gerade im wesentlichen Auslösefall eines Fahrzeugunfalls ergibt sich dadurch eine besondere Gefährdung des Fahrzeugs und seiner Insassen und damit ein erhebliches Wirksamkeitsproblem des gesamten Sicherheitsschalters.

Der Erfindung liegt die Aufgabe zugrunde, einen elektrischen Sicherheitsschalter der eingangs genannten Art zu schaffen, der eine sichere Fixierung des Schalters und Langzeitstabilität verbunden mit einer Unempfindlichkeit gegenüber den im Normalfall auftretenden mechanischen Beanspruchungen aufweist.

Die Erfindung löst diese Aufgabe mit den Mitteln des Patentanspruchs 1.

Die erfindungsgemäße Lösung bietet einerseits den Vorteil, die Treibladung auf mechanisch einfache Weise unterzubringen. Im Gegensatz zum eingangs genannten Dokument ist damit auch eine irgendwie geartete mechanische Beaufschlagung der Treibladung, wie sie bei einer frei verlegten Sicherheitseinrichtung vorkommen kann, weitgehend ausgeschlossen.

Die Integration von Treibladung und Batteriekabelklemme ermöglicht es, ohne zusätzliche Befestigung die Treibladung sicher und auch bei längerem Gebrauch unverändert wirksam anzuordnen. Die Abstützung des Gewichts der Treibladung und ihres Gehäuses kann nicht nur durch die Batteriekabelklemme, sondern auch durch die Oberfläche der Fahrzeugbatterie vorgenommen werden. Dadurch ergibt sich eine besonders mechanisch stabile Ausführungsform de Schalters.

Besondere konstruktive Ausführungen hierzu sind in den Patentansprüchen 2 bis 5 angegeben. So überzeugt die Ausführungsform nach Patentanspruch
2 durch den Vorteil der einfachen Herstellung,
3 und 4 als Alternativen zur Ausführungsform von Patentanspruch 2, die einen geringen Herstellungsaufwand erfordern und
5 durch die bleibende Trennung der elektrischen Verbindung im Bedarfsfall.

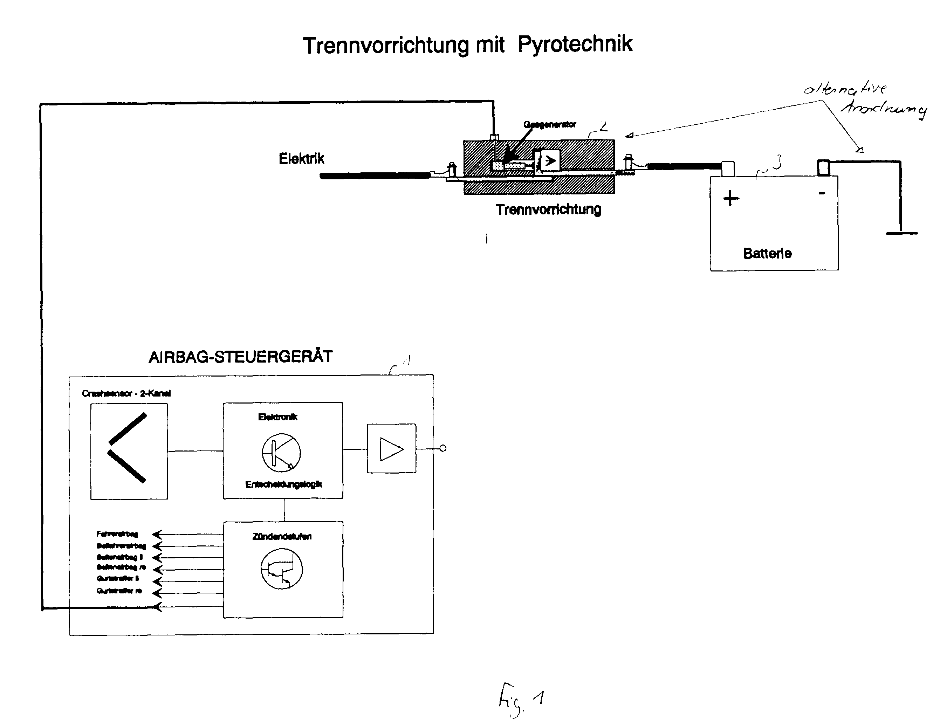

In der Zeichnung sind Ausführungsbeispiele der Erfindung dargestellt. Es zeigt
- Fig.1: den prinzipiellen Aufbau und die Anordnung des erfindungsgemäßen Sicherheitsschalters im Bordnetz eines Kraftfahrzeugs
- Fig.2: den Sicherheitsschalter von Fig. 1 im Detail
- Fig.3: eine Variante des Sicherheitsschalter von Fig. 3 und
- Fig.4-7: weitere Ausführungsformen.

Im Bordnetz eines Kraftfahrzeugs befindet sich ein Airbag-Steuergerät 1, das einen an sich bekannten Aufbau besitzt und im wesentlichen eine Entscheidungslogik beinhaltet, die Zündendstufen für verschiedene, nicht dargestellte Airbags wie Fahrerairbag, Beifahrerairbag, Seitenairbag links, Seitenairbag rechts sowie ggf. pyrotechnisch betätigbarer Gurtstraffer für den linken und den rechten Vorder-Sicherheitsgurt steuert. Die Entscheidungslogik ist durch einen Crashsensor auslösbar, der nicht im Detail dargestellt ist. Wesentlich dabei ist jedoch, daß es sich um einen zwei-kanaligen Sensor handelt, d.h. der Sensor ist in der Lage, eine Beschleunigung des Kraftfahrzeugs in zwei zueinander senkrecht liegenden Richtungen zu detektieren.

Ein Ausgang der Zündendstufen führt zu einer Sicherheitsschalter 2, der im Bordnetz des Kraftfahrzeugs unmittelbar hinter dem Pluspol einer Fahrzeugbatterie 3 angeordnet ist. Eine alternative Anordnung unmittelbar hinter dem Masse-Pol der Batterie 3 ist durch einen Pfeil angedeutet.

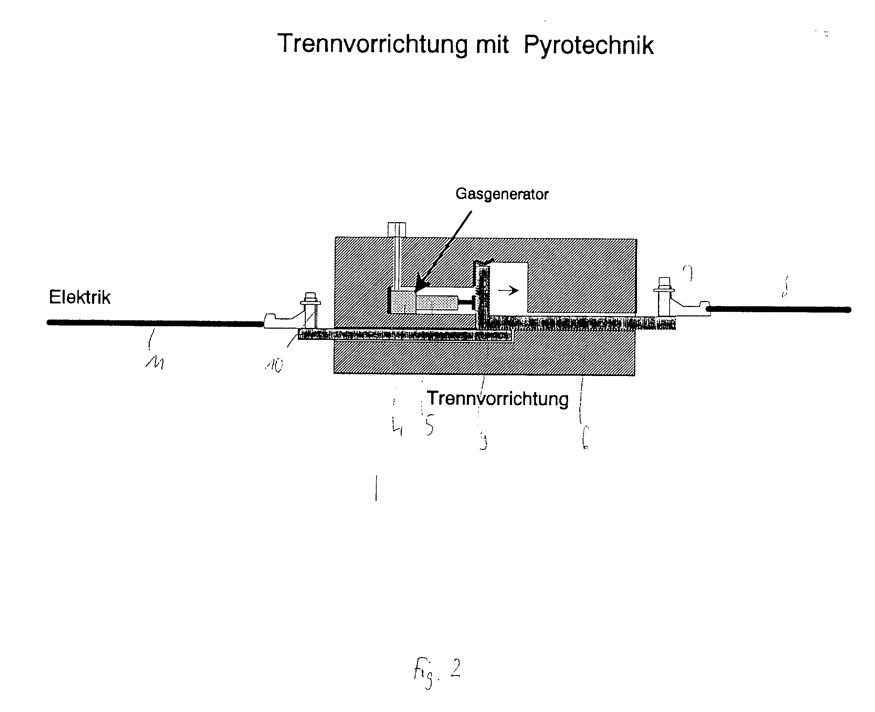

Innerhalb des Schalters 2 befinden sich, wie in Fig. 2 im Detail gezeigt, ein Gasgenerator 4, der über einen Kolben 5 auf ein beweglich gelagertes Kontaktteil 6 arbeitet. Das Kontaktteil 6 ist über einen Anschluß 7 und eine Leitung 8 mit der Batterie 3 verbunden. Das Kontaktteil 6 steht in der eingezeichneten Ruhelage auch mit einem feststehenden Kontaktteil 9 in leitender Verbindung, das einen Anschluß 10 für eine Leitung 11 trägt, die mit dem nicht dargestellten Bordnetz des Kraftfahrzeugs verbunden ist und dieses mit Batteriestrom speist.

Im Crashfall werden, abhängig von der Schwere des Aufpralls, über die Entscheidungslogik in der Regel die Folge der Zündendstufen für die dargestellten Sicherheitseinrichtungen gezündet. Anschließend erfolgt die Zündung des Gasgenerators 4. Dadurch wird das Kontaktteil 6 in Richtung des Pfeils bewegt und die leitende Verbindung zwischen den Kontaktteilen 6 und 9 unterbrochen. Damit ist das Bordnetz stromlos und eine Gefährdung des Fahrzeugs oder seiner Insassen aufgrund von Kurzschlüssen oder dgl. ausgeschlossen. Die Zündung des Gasgenerators 4 erfolgt unabhängig von der Zündung der anderen Sicherheitseinrichtungen.

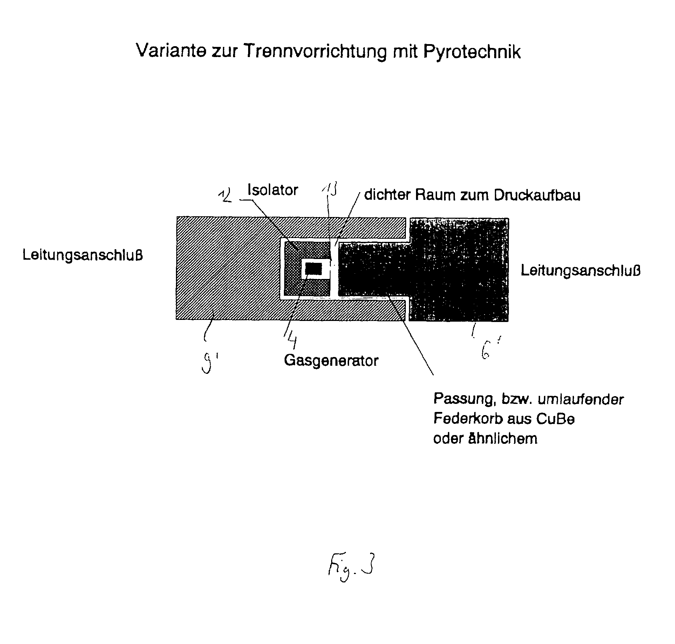

Beim Ausführungsbeispiel von Fig. 3 ist eine Alternative des Sicherheitsschalters dargestellt. Ein feststehender Kontakt 9' ist über eine Passung bzw. einen umlaufenden Federkorb (nicht dargestellt) aus einem geeigneten Material, z.B. CuBe oder ähnlichem versehen. Zwischen den Kontaktteilen 6' und 9' befindet sich der Gasgenerator 4, der in einem Isolator 12 gehalten ist.

Im Crashfall wird der Gasgenerator 4 gezündet. Innerhalb eines Raumes 13 zwischen den Kontaktteilen baut sich ein starker Druck auf, der zu einem Absprengen des Kontaktteils 6' und damit zu einer Trennung der leitenden Verbindung führt. Auch damit werden die beiden elektrischen Leitungen 11 und 8 unterbrochen und das Bordnetz stromlos gemacht.

Es ist ohne weiteres zu erkennen, daß die dargestellten Ausführungsformen konstruktiv besonders einfach sind und auch hinsichtlich ihrer Auslösung problemlos sind. Sie setzen lediglich voraus, daß ein geeigneter Crashsensor vorhanden ist, der auf die Schwere einer Fahrzeugbeschleunigung richtungsunabhängig anspricht.

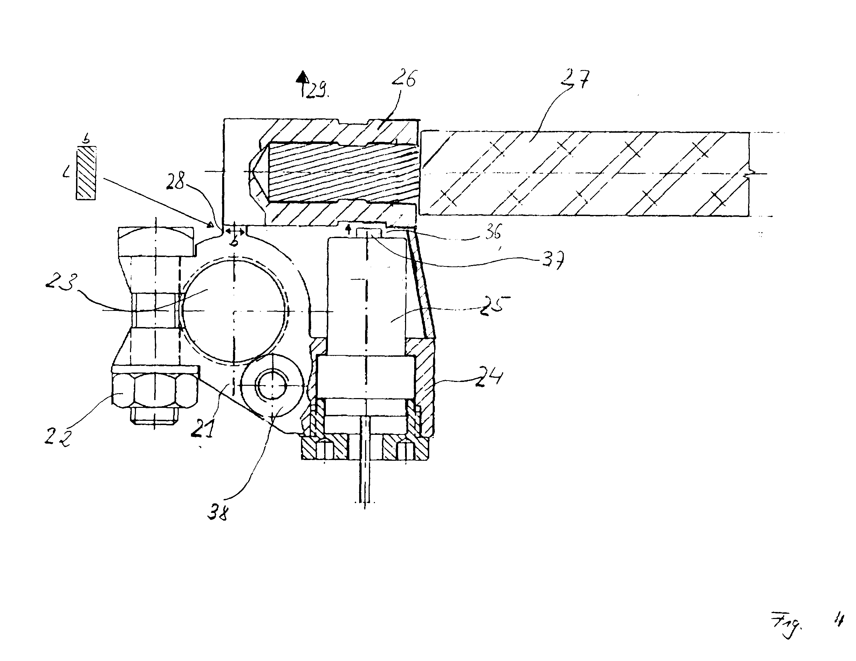

Beim Ausführungsbeispiel von Figur 4 ist eine in der Draufsicht gezeichnete Batteriekabelklemme 21 mit einem Schraubbolzen 22 an einem Batteriepol 23 einer nicht im einzelnen gezeigten Fahrzeugbatterie gehalten. Mit der Klemme 21 zu einer Baueinheit zusammengefaßt ist ferner ein Gehäuse 24 für eine Treibladung 25 sowie eine Buchse 26, mit der ein Stromkabel 27 angeschlagen ist. Das Kabel 27 führt zu nicht dargestellten elektrischen Verbrauchern des Kraftfahrzeugs.

Zwischen der Buchse 26 und der Klemme 21 ist eine Sollbruchstelle 28 angeordnet. Diese reicht zwar aus, bei den bei normalem Betrieb des Kraftfahrzeugs entstehenden Beschleunigungen die elektrische Verbindung zwischen dem Kabel 27 und dem Batteriepol 23 aufrechtzuerhalten. Sie dient jedoch dazu, bei einer anormal großen Beschleunigung diese Verbindung zu unterbrechen.

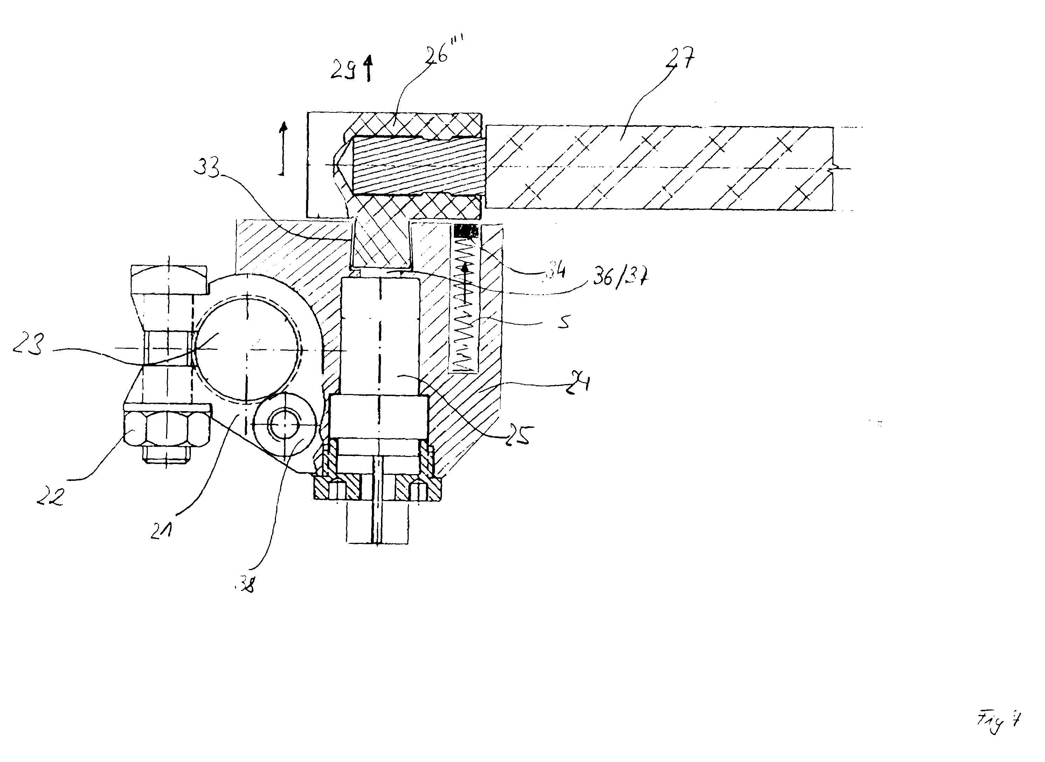

Hierzu wird die Treibladung 25 gezündet. Der sich in einem Volumen 36 ausbildende Druck ist so groß, daß die Buchse 26 in Richtung des Pfeils 29 bewegt wird. Die elektrische Verbindung zwischen Kabel 27 und dem Batteriepol 23 wird an der Sollbruchstelle 28 unterbrochen. Ein in Figur 7 gezeigter Abstandshalter kann gegebenenfalls vorgesehen sein und die Unterbrechung auch bei zurückschlagendem Kabel 27 aufrecht erhalten.

Die Zündung der Treibladung 25 erfolgt durch ein nicht dargestelltes Airbag-Steuergerät. Dieses arbeitet abhängig von der Größe und gegebenenfalls der Richtung der auftretenden Beschleunigung und zündet die Treibladung 25 gegebenenfalls erst dann, wenn die primären Auslösevorgänge, wie beispielsweise des Airbags und dergleichen, ausgeführt sind. Selbstverständlich ist es auch möglich, für die Zündung der Treibladung 25 einen separaten Beschleunigungssensor mit entsprechender Entscheidungslogik vorzusehen.

Anstelle des Gasvolumens 36 kann die Abtrennung des Kabels 27 auch durch ein mechanisches Bauteil, z. B. einen Kolben 37 erfolgen, das durch die Treibladung angetrieben wird.

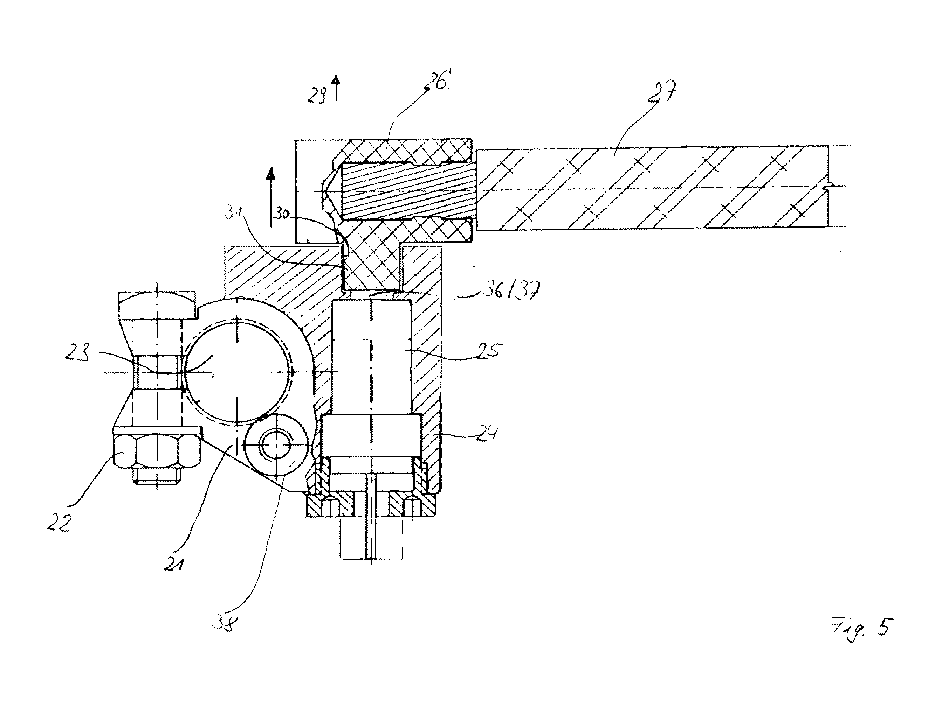

Beim Ausführungsbeispiel von Figur 5 sind zwischen einer Buchse 26', mit der wie bei Figur 4 das Kabel 27 angeschlagen ist, und der Batteriekabelklemme 21 zwei Kontaktflächen 30 und 31 vorgesehen, die mittels einer Preßpassung miteinander verbunden sind. Wird die Treibladung 25 gezündet, so werden die beiden Kontaktflächen 30 und 31 voneinander getrennt und damit die elektrische Verbindung des Kabels 27 mit der Klemme 21 unterbrochen. Auch hier kann ein Abstandshalter vorgesehen sein, der ein Wiederherstellen der elektrischen Verbindung verhindert.

Denkbar ist die Ausführung der Kontaktflächen 30, 31 auch als Steckverbindung, wobei die Buchse, wahlweise an der Leitung oder Klemme mit einem innenliegenden Federkorb aus hochleitendem Werkstoff ausgebildet ist.
Die Steckverbindung ist mit einer sicheren zusätzlichen Schnappverbindung (Sekundärverrastung) ausgestattet, um ein unbeabsichtigtes Lösen zu vermeiden.

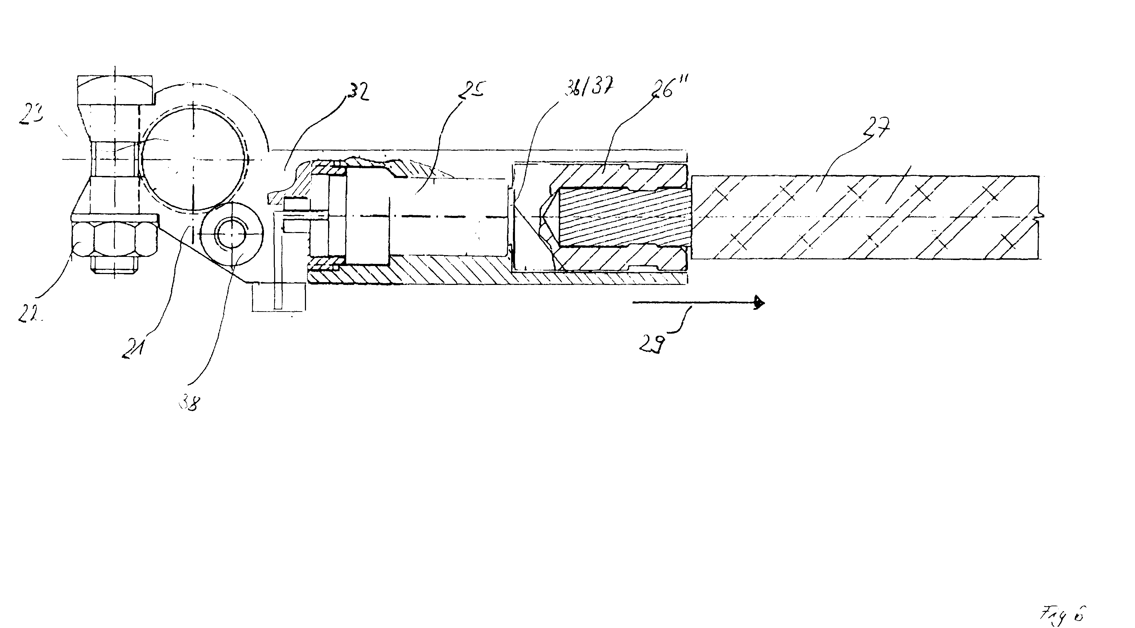

Bei der Ausführungsform von Figur 6 ist die Wirkrichtung der Treibladung 25 gegenüber der Ausführungsform von Figur 5 um 90 ° gedreht und verläuft in Richtung des Kabels 27. Die hier vorgesehene Buchse 26" ist ebenfalls durch eine Preßpassung in einer axialen Verlängerung 32 der Batteriekabelklemme gehalten.

Schließlich zeigt Figur 7 eine Ausführungsform, bei der die Buchse 26'" für das Kabel 27 in einer Schwalbenschwanzführung an der Batteriekabelklemme 21 gehalten ist. Im Crashfall wird die Buchse 26'" aus der konischen Führung 33 ausgetrieben und damit die Verbindung des Kabel 27 mit der Batteriekabelklemme 21 unterbrochen. Hier ist zusätzlich auch ein Abstandshalter 34 gezeigt, der als Federelement ausgebildet ist. Wird die Buchse 26'" durch die Treibladung ausgetrieben, so fährt eine Feder 35 aus und hält die Buchse 26'" in Abstand. Damit kann die elektrische Bindung nach ihrer Unterbrechung nicht mehr wiederhergestellt werden.

Allen Ausführungsformen gemeinsam ist der einfache mechanisch konstruktive Aufbau, die sichere Fixierung des Schalters an der Batterie und die Langzeitstabilität verbunden mit einer Unempfindlichkeit gegenüber den im Normalfall auftretenden mechanischen Beanspruchungen.

## Patentansprüche

1. Elektrischer Sicherheitsschalter (2) für Kraftfahrzeuge, mit zwei Kontaktteilen (6, 9), deren Kontaktoberflächen im Normalfall aufeinander liegen und die bei einer anormal großen Beschleunigung des Kraftfahrzeugs voneinander trennbar sind, bei dem die beiden Kontakflächen mit pyrotechnischen Mitteln (Treibladung) voneinander trennbar sind und die Auslösung der Trennung mittels eines Airbag-Steuergeräts (1) unabhängig von den sonstigen davon gesteuerten Systemen erfolgt, dadurch gekennzeichnet, daß die Kontaktflächen im Bereich einer Batteriekabelklemme liegen, die zum Anschluß eines Batteriekabels an einem Batteriepol dient und die Treibladung (25) mit einer Batteriekabelklemme (21) eine Baueinheit bildet und das mit der Klemme befestigte Kabel (27) abwirft.

2. Schalter nach Anspruch 1, **dadurch gekennzeichnet, daß** das Kabel (27) in einer Buchse (26) gehalten ist, die über eine Sollbruchstelle (26) mit der Batteriekabelklemme (21) verbunden ist.

3. Schalter nach Anspruch 1, **dadurch gekennzeichnet, daß** die beiden Kontaktteile (30, 31) mittels einer Preßpassung aufeinander liegen.

4. Schalter nach Anspruch 1, **dadurch gekennzeichnet, daß** die beiden Kontaktteile mittels einer Schwalbenschwanzführung (33) gehalten sind.

5. Schalter nach einem der Ansprüche 1 bis 4, **dadurch gekennzeichnet, daß** ein Abstandshalter (34, 35) zwischen Kabel (27) und Batteriekabelklemme (21) vorgesehen ist, der bei geöffneter Verbindung wirksam ist.

## Claims

1. An electric safety switch (2) for motor vehicles, comprising two contact parts (6, 9) having contact surfaces which normally rest on one another and which are separable from one another after abnormal acceleration or deceleration of the vehicle, wherein the two contact surfaces are separable from one another by pyrotechnic means (a propellant charge) and separation is triggered by an air bag control device (1) irrespectively of the other systems controlled thereby, characterised in that the contact surfaces are in the neighbourhood of a battery cable clamp which connects a battery cable to a battery terminal, and the propellant charge (25) and the battery cable clamp (21) form a structural unit and release the cable (27) fastened by the clamp.

2. A switch according to claim 1, characterised in that the cable (27) is held in a socket (26) which is connected to the battery cable clamp (21) via a predetermined breaking point (26).

3. A switch according to claim 1, characterised in that the two contact parts (30, 31) are force-fitted on one another.

4. A switch according to claim 1, characterised in that the two contact parts are held by a dovetail guide (33).

5. A switch according to any of claims 1 to 4, characterised in that a spacer (34, 35) is provided between the cable (27) and the battery cable clamp (21) and operates when the connection is broken.

## Revendications

1. Interrupteur électrique de sécurité (2) pour véhicule automobile comportant deux pièces de contact (6, 9) dont les surfaces extérieures de contact sont normalement appliquées l'une contre l'autre et qui en cas d'accélération ou d'amplitude anormale du véhicule se séparent,
les deux surfaces de contact pouvant être séparées l'une de l'autre par des moyens pyrotechniques (charge propulsive) et le déclenchement de la séparation se fait à l'aide d'un appareil de commande de coussin d'air (1), indépendamment des autres systèmes commandés par ailleurs,
caractérisé en ce que
les surfaces de contact se situent dans la zone de la borne du câble de la batterie servant à brancher un câble de batterie à un pôle de batterie et,
- la charge propulsive (25) forme un ensemble constructif avec la borne du câble de la batterie (21) et,
- la charge propulsive expulse le câble (27) fixé à la borne.

2. Interrupteur selon la revendication 1,
caractérisé en ce que
le câble (27) est tenu dans un manchon (26) relié par un point de rupture de consigne (26) à la borne du câble de batterie (21).

3. Interrupteur selon la revendication 1,
caractérisé en ce que
les deux parties de contact (30, 31) sont appliquées l'une sur l'autre par une adaptation pressée.

4. Interrupteur selon la revendication 1,
caractérisé en ce que
les deux parties de contact sont tenues l'une à l'autre par un moyen de guidage (33) en forme de queue d'aronde.

5. Interrupteur selon l'une quelconque des revendications 1 à 4,
caractérisé en ce qu'
un organe d'écartement (34, 35) est prévu entre le câble (27) et la borne (21) du câble de la batterie lorsque la liaison a été ouverte.
